# EUROPEAN PATENT SPECIFICATION

(11) **EP 2 167 247 B1**
(45) Date of publication and mention of the grant of the patent: **30.11.2011**
(21) Application number: 08779041.6
(22) Date of filing: 18.07.2008
(51) Int. Cl.: B09B 3/00, B09B 1/00, B03B 9/06

(54) **AN ASSEMBLY AND A METHOD FOR IN SITU PROCESSING OF WASTE**
ANORDNUNG UND VERFAHREN FÜR MÜLLVERARBEITUNG VOR ORT
ENSEMBLE ET PROCÉDÉ POUR UN TRAITEMENT IN SITU DE DÉCHETS

(30) Priority: 18.07.2007 NL 2000759
(43) Date of publication of application: 31.03.2010
(73) Proprietor: MPI - Management B.V., 7577 CE Oldenzaal (NL)
(72) Inventor: KOENS, Antonius Dorotheus, NL-7572 XK Oldenzaal (NL)
(74) Representative: Ketelaars, Maarten F.J.M.
(86) International application number: PCT/NL2008/050495
(87) International publication number: WO 2009/011588

(56) References cited:
- WO-A-2007/037768
- DE-A1- 4 103 715
- DE-C1- 4 408 716
- US-B1- 6 389 747

## Description

### Background of the invention

The invention relates to assembly and method for the in situ processing of waste.

In particular, the assembly and method is suitable for cleaning up a waste disposal site or former waste disposal site.

Such an approach to current and former waste disposal sites has not been known or applied until now.

Former waste disposal sites in particular are often situated in locations and places that are very suitable for other purposes, such as residential building or industrial development. However, because of the presence of the waste, nothing more can be done with the site.

The document DE-C1-4408716 discloses an assembly in accordance with the preamble of claim 1 and a method in accordance with the preamble of claim 10.

### Summary of the invention

The object of the invention is to provide an assembly and a method for restoring to a usable state ground area that is currently or was formerly used as a waste disposal site.

A further object of the invention is to perform such restoration in an environmentally sound manner, without emission of harmful substances, and without such harmful substances reaching the environment.

These objects are achieved by the assembly in accordance with claim 1 and the method in accordance with claim 10.

To this end, the invention provides an assembly for the in situ processing of waste, in particular for cleaning up a waste disposal site, to form a series of output flows, comprising:
- a sorting device for supplying and separating a waste flow into various partial flows, comprising a metals flow, a plastics flow, a glass flow, an organic flow and a chemical waste flow;
- a set of processing devices, comprising:
   - a fermenting device for converting the organic flow into combustible biogases, provided with a fermenter inlet which is operationally connected to the sorting device, a biogas outlet which is connected to a biogas buffer, and a fermenter residual product outlet;
   - a fluidized bed gasifier for converting carbon-comprising materials into combustible gaseous products, comprising a gasifier inlet which is operationally connected to the sorting device, and a gasifier outlet;
   - a pyrolysis device for decomposing a flow of decomposable materials, such as the flow of chemical waste, into hydrocarbons and pyrolysis ash, comprising a pyrolysis inlet which is operationally connected to the sorting device, and a pyrolysis outlet which is connected to a pyrolysis buffer;
- a generator with a steam turbine connected to it, operationally connected to a combustion chamber provided with a fuel inlet which is connected to the biogas buffer, the gasifier outlet and the pyrolysis buffer, and
- a control device comprising a measuring device for measuring the composition of the various waste flows from the sorting device, the measuring device comprising a weighing device for weighing the waste flow, the various partial flows and the residual flows, and the measuring device being operationally connected to a computer device and a data storage device for logging the measured data from the measuring device, an input device for inputting proportion of desired output flows from the assembly, a first regulator at the fermenter inlet, a second regulator at the gasifier inlet, and a third regulator at the pyrolysis inlet, the computer being provided with software for calculating, from the measured data and the proportion of the desired output flows, flows of material to be supplied to the devices, and controlling of the first, second and third regulator for providing calculated material flows flowing to the processing devices.

By means of the devices and by continuous monitoring of the waste flow set in motion, it is possible to react immediately to components and substances present in the waste flow. Refuse dumps are often found to contain a high concentration of relatively valuable residual materials. By means of the control device, it is furthermore possible to control the end products in such a way that the financial return can be maximized. Moreover, continuous control of the processed flow is possible, also for a supervisor/authority having to supervise responsible processing.

The processing devices make it possible to vary the processing capacity and adapt it to a situation, in other words, inter alia, to vary the compositions and quantities of the various flows and the desired end products or proportion of end products.

Further embodiments of the assembly according to the invention are described in subclaims 2 - 9.

Subclaims 2 - 8 deal with interconnections in the assembly making it possible to use products obtained in one part of the assembly as fuel in another part of the assembly, and in particular under the control of the control device.

Claims 2 and 3 deal with the generation of electricity by means of those products usable as fuel. The electricity output here is greater than the electricity requirements of the assembly, so that electricity, even a great deal of electricity, can also be supplied to the national or another electric grid.

According to Claim 9, one or more of the processing devices - in particular all processing devices - and/or the generator unit and/or the incinerators are made up of modules that can be disassembled and reassembled, which modules can be transported by road on a vehicle such as a low loader or truck. The assembly according to the invention is therefore easy to disassemble after the work has been carried out in situ, and is easy to move to another site, construct at that other site and use at that other site for the in situ processing of waste there. This is of great benefit particularly for cleaning up waste disposal sites.

The invention also relates to a method for processing waste, in particular for processing or cleaning up of a waste disposal site, comprising the steps:
- Supplying a waste flow from a waste disposal site;
- separating the waste flow into different flows of reusable material, such as glass, metal and plastic and a flow of residual material, such as a flow of organic material, a flow of carbon-containing material and a flow of chemical waste;
- measuring parameters of the composition of the waste flow, of the flows of residual material and of the flows of reusable material, comprising the mass;
- inputting the measured parameters into a control device;
- inputting an end product demand or a proportion of end products into the control device;
- calculating from the input end product demand or the proportion of end products and the measured parameters a first, second and third flow of residual material;
- by means of control device, controlling the supply of the first flow of residual material to a biogas device, the supply of the second flow of residual material to a fluidized bed device, and the supply of the third flow of residual material to a pyrolysis device.

### Brief description of the figures

The appended figures show various embodiments of an assembly and a method according to the invention, in which:
Fig. 1 shows a chart of the various processing devices and flows between them;
Fig. 2 shows the chart of Figure 1 with a control device and the control.

### Description of embodiments

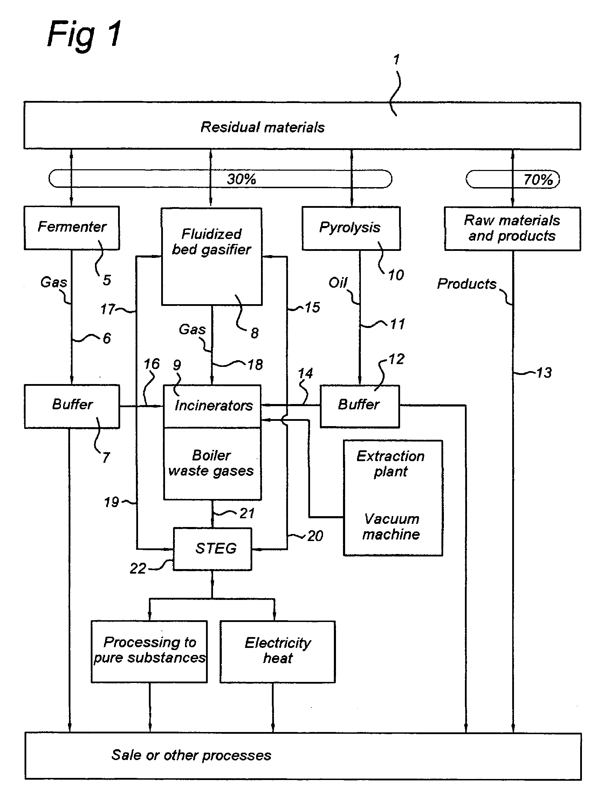

Figure 1 shows an embodiment of an assembly for the in situ processing of waste or for cleaning up a waste disposal site according to one embodiment of the invention. The waste disposal site or the flow of waste is set in motion by means of, for example, an excavator or other devices which excavate a refuse dump and convert it into a flow of material which is fed to a sorting device 1.

The sorting device 1 can be composed of one or more of the following interconnected components, such as, for example, one or more: Rotamill excavator(s); shovel(s); shovel loader(s); dumper truck(s), such as the Volvo BM type, conveyor belts; Powerscreen GAOF screen(s); vibrating conveyor(s), for example one or more octagonal drum screens, one or more round drum screens, one or more flat vibrating screens; magnetic separator(s); wind shifter(s); air jet separator(s) (also referred to as airjets); low-pressure cold washer(s); low-pressure hot washer(s); high-pressure steam washer(s); high-pressure pulsating washer(s); alkaline washing machine(s); acid washing machine(s); neutralization washing machine(s); UV treatment unit(s); paper spike(s) (a standard component obtainable from, inter alia, Bollegraaf in Appingerdam, the Netherlands); ultrasonic cleaning unit(s); LI separator(s) (a special type of glass/metal separator); color separators for separating colored glass; CP Unit separator(s) (a plastics separating machine); high-pressure water cutter(s); shredder(s), such as high-speed shredder(s) and/or low-speed shredder(s).

These components divide the flow of materials into and convey them in various flows, including, for example, a flow of metal waste, a flow of plastics waste, a flow of glass waste, and a flow of mainly organic material. The various flows can be fed to various processing devices, which are shown in Figure 1.

The flow of mainly organic material will usually be fed to a fermenter 5, where aerobic or anaerobic fermenting converts the organic material into biogas. The biogas flow is indicated by reference numeral 6. Said biogas flow will usually be stored in buffer 7.

A second flow of residual material is a flow that consists largely of carbon-containing materials. These carbon-containing materials are passed over a fluidized bed gasifier 8, where a large part of the material is converted into combustible gaseous product, which flow of gaseous product is indicated by reference numeral 18. This combustible gaseous product is fed to incinerators 9. The solid particles can be removed from the waste gases of the incinerators for processing to pure substances. Furthermore, the waste gases, in particular the heat that they contain, can be used for generating electricity.

Another flow of residual material is fed for processing to a pyrolysis device 10, where material with carbon can be converted into oily products, which flow is indicated by reference numeral 11, and which flow of oily material is stored in buffer 12.

As indicated by arrows 14 and 15, oily material stored in buffer 12 is reusable as a fuel for the fluidized bed gasifier 8 and/or the incinerators 9. As indicated by arrows 16 and 17, the biogases stored in buffer 7 are also reusable as a fuel for the fluidized bed gasifier 8 and/or the incinerators 9. Whether or not contents of one - and if so, which one - and/or both of these buffers are used as fuel for the fluidized bed gasifier 8 and/or the incinerators 9 will depend on the presence and the composition of the contents of the buffers. Mixing of fuel from the one buffer 7 with fuel from the other buffer 12 is also conceivable. The control device 40 yet to be discussed below is capable of controlling this mixing by means of measuring devices 41 - 53 and regulators 60 - 72.

The flow of reusable materials, including a metals flow and a glass waste flow, are separated further and can be offered as pelletized material for reuse. The plastic or substantially plastic containing material can be fed either to the fluidized bed gasifier or to the pyrolysis device, or it can be sorted and turned into scrap and supplied as a raw material and offered to producers. This flow is shown by reference numeral 13.

The assembly is furthermore provided with a generator unit 22. This generator unit comprises an electricity generator and a combustion chamber. The combustion chamber can form part of an internal combustion engine, but according to the invention it is in particular operationally connected to a steam turbine system, which is indicated in the drawing as STEG (Steam Electricity Generator). The generator unit 22 is fed with fuel obtained elsewhere in the assembly. For this purpose, the generator unit is connected by means of line 19 to the biogas buffer 7, by means of line 21 to the incinerator unit 9, and by means of line 20 to the pyrolysis buffer 12. By means of regulators 70, 71 and 72, the control device 40 to be discussed below is capable of regulating the fuel flows through the lines 19, 20, 21.

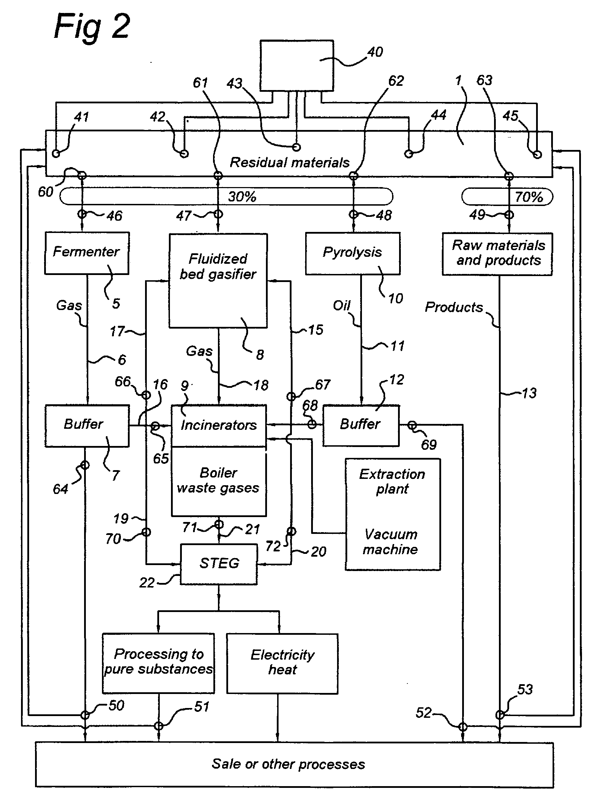

In Figure 2 a control device 40 is added to the diagrammatic view of Figure 1. The control device 40 is operationally connected to measuring devices 41 - 53. These measuring devices will in most cases comprise weighing devices. These weighing devices make it possible, inter alia, to produce records of the mass of the various flows.

The control device 40 is furthermore connected to regulators 60 - 72 to regulate the flows to the various devices. These regulators can be, for example, slides which divide the flows, or actuators which move or turn conveyor belts, so that they make the flow of material, for example from the fermenter, go fully or partially to the fluidized bed gasifier, or they can be valves which regulate the volume flow rate through a line.

## Claims

1. An assembly for the in situ processing of waste, in particular for cleaning up a waste disposal site, to form a series of output flows, comprising:
- a sorting device (1) for supplying and separating a waste flow into various partial flows, comprising a metals flow, a plastics flow, a glass flow, an organic flow and a chemical waste flow;
- a set of processing devices, comprising:
- a fermenting device (5) for converting the organic flow into combustible biogases, provided with a fermenter inlet which is operationally connected to the sorting device (1), a biogas outlet (6) and a fermenter residual product outlet;
- a fluidized bed gasifier (8) for converting carbon-comprising materials into combustible gaseous products, comprising a gasifier inlet which is operationally connected to the sorting device (1), and a gasifier outlet (18);
- a pyrolysis device (10) for decomposing a flow of decomposable materials, such as the flow of chemical waste, into hydrocarbons and pyrolysis ash, comprising a pyrolysis inlet which is operationally connected to the sorting device and a pyrolysis outlet (11);
- a control device (40);
**characterized in that** :
- the biogas outlet (6) is connected to a biogas buffer (7);
- the pyrolysis outlet (11) is connected to a pyrolysis buffer (12);
- the control device (40) comprises a measuring device (41 - 53) for measuring the composition of the various waste flows from the sorting device, the measuring device comprising a weighing device for weighing the waste flow, the various partial flows and the residual flows, and the measuring device being operationally connected to a computer device and a data storage device for logging the measured data from the measuring device (41 - 53), an input device for inputting proportion of desired output flows from the assembly, a first regulator (60) at the fermenter inlet, a second regulator (61) at the gasifier inlet, and a third regulator (63) at the pyrolysis inlet, the computer being provided with software for calculating, from the measured data and the proportion of the desired output flows, flows of material to be supplied to the devices, and controlling of the first (60), second (61) and third (63) regulator for providing calculated material flows flowing to the processing devices (5, 8, 10).

2. The assembly as claimed in claim 1, **characterized in that** the assembly furthermore comprises a generator unit (22) provided with electricity generator, a combustion chamber provided with a fuel inlet, and preferably a steam turbine operationally connected to the electricity generator and the combustion chamber, the fuel inlet of the combustion chamber being connected to the biogas buffer (7) and/or the gasifier outlet (21) and/or the pyrolysis buffer (12).

3. The assembly as claimed in claim 2, **characterized in that** the control device (40) is operationally connected to regulators (70, 71, 72) in order to control the fuel flow from the biogas buffer (7) to the combustion chamber and/or from the gasifier outlet (21) to the combustion chamber and/or from the pyrolysis buffer (12) to the combustion chamber respectively.

4. The assembly as claimed in one of the preceding claims, **characterized in that** the biogas buffer (7) is coupled to the fuel supply of the fluidized bed gasifier (8) in order to supply fuel to the fluidized bed gasifier (8), and/or **in that** the pyrolysis buffer (12) is coupled to the fuel supply of the fluidized bed gasifier (8) in order to supply fuel to the fluidized bed gasifier (8).

5. The assembly as claimed in claim 4, **characterized in that** the control device (40) is operationally connected to regulators (66, 67) in order to control the fuel flow from the biogas buffer (7) to the fluidized bed gasifier (8), and/or from the pyrolysis buffer (12) to the fluidized bed gasifier (8) respectively.

6. The assembly as claimed in one of the preceding claims, **characterized in that** the gasifier outlet (18) of the fluidized bed gasifier is connected to incinerators (9) for burning combustible constituents in the flow guided through the gasifier outlet.

7. The assembly as claimed in claim 6, **characterized in that** the biogas buffer (7) is cooupled to the fuel supply of said incinerators (9) in order to supply fuel to said incinerators (9) and/or **in that** the pyrolysis buffer (12) is coupled to the fuel supply of said incinerators (9) in order to supply fuel to said incinerators (9).

8. The assembly as claimed in claim 7, **characterized in that** the control device (40) is operationally connected to regulators (65, 68) in order to control the fuel flow from the biogas buffer (7) to the incinerators (9) and/or from the pyrolysis buffer (12) to the incinerators (9) respectively.

9. The assembly as claimed in one of the preceding claims, **characterized in that** one or more of the processing devices (5, 8, 10), in particular all processing devices (5, 8, 10) and/or the generator unit (22) and/or the incinerators (9) are made up of modules that can be disassembled and reassembled, which modules can be transported by road on a vehicle such as a low loader or truck.

10. A method for processing waste, in particular for processing or cleaning up of a waste disposal site, comprising the steps:
- supplying a waste flow from a waste disposal site;
- separating the waste flow into different flows of reusable material, such as glass, metal and plastic and a flow of residual material, such as a flow of organic material, a flow of carbon-containing material and a flow of chemical waste;
**characterized in that** the method comprises the steps:
- measuring parameters of the composition of the waste flow, of the flows of residual material and of the flows of reusable material, comprising the mass;
- inputting the measured parameters into a control device;
- inputting an end product demand or a proportion of end products into the control device;
- calculating from the input end product demand or the proportion of end products and the measured parameters a first, second and third flow of residual material;
- by means of the control device, controlling the supply of the first flow of residual material to a biogas device, the supply of the second flow of residual material to a fluidized bed device, and the supply of the third flow of residual material to a pyrolysis device.

## Patentansprüche

1. Anordnung zur Abfallverarbeitung vor Ort, insbesondere zur Sanierung einer Mülldeponie, um eine Folge von Ausgangsströmen zu bilden, mit:
- einer Sortiervorrichtung (1) zum Zuführen und Trennen eines Abfallstroms in verschiedene Teilströme, die einen Metallstrom, einen Kunststoffstrom, einen Glasstrom, einen organischen Strom und einen Chemieabfallstrom aufweisen;
- einem Satz von Verarbeitungsvorrichtungen mit:
- einer Fermentationsvorrichtung (5) zum Umwandeln des organischen Stroms in brennbare Biogase, die mit einem Fermentereinlass, der mit der Sortiervorrichtung (1) betrieblich verbunden ist, einem Biogasauslass (6) und einem Fermenterrückstandsauslass versehen ist;
- einem Wirbelschichtvergaser (8) zum Umwandeln von Kohlenstoff aufweisenden Materialien in brennbare gasförmige Produkte mit einem Vergasereinlass, der mit der Sortiervorrichtung (1) betrieblich verbunden ist, und einem Vergaserauslass (18);
- einer Pyrolysevorrichtung (10) zum Zersetzen eines zersetzbaren Materialstroms, z. B. des Chemieabfallstroms, in Kohlenwasserstoffe und Pyrolyseasche mit einem Pyrolyseeinlass, der mit der Sortiervorrichtung betrieblich verbunden ist, und einem Pyrolyseauslass (11);
- einer Steuervorrichtung (40),
**dadurch gekennzeichnet, dass**:
- der Biogasauslass (6) mit einem Biogaspuffer (7) verbunden ist;
- der Pyrolyseauslass (11) mit einem Pyrolysepuffer (12) verbunden ist;
- die Steuervorrichtung (40) eine Messvorrichtung (41-53) zum Messen der Zusammensetzung der verschiedenen Abfallströme von der Sortiervorrichtung aufweist, wobei die Messvorrichtung eine Wiegevorrichtung zum Wiegen des Abfallstroms, der verschiedenen Teilströme und der Rückstandsströme aufweist und die Messvorrichtung betrieblich verbunden ist mit einer Computervorrichtung und einer Datenspeichervorrichtung zum Registrieren der Messdaten von der Messvorrichtung (41-53), einer Eingabevorrichtung zum Eingeben des Anteils von Soll-Ausgangsströmen aus der Anordnung, einem ersten Regler (60) am Fermentereinlass, einem zweiten Regler (61) am Vergasereinlass und einem dritten Regler (63) am Pyrolyseeinlass, wobei der Computer versehen ist mit Software zum anhand der Messdaten und des Anteils der Soll-Ausgangsströme erfolgenden Berechnen von Materialströmen, die den Vorrichtungen zuzuführen sind, und Steuern des ersten (60), zweiten (61) und dritten (63) Reglers zum Bereitstellen berechneter Materialströme, die zu den Verarbeitungsvorrichtungen (5, 8, 10) strömen.

2. Anordnung nach Anspruch 1, **dadurch gekennzeichnet, dass** die Anordnung ferner aufweist: eine Generatoreinheit (22), die mit einem Stromgenerator versehen ist, eine Brennkammer, die mit einem Brennstoffeinlass versehen ist, und vorzugsweise eine Dampfturbine, die mit dem Stromgenerator und der Brennkammer betrieblich verbunden ist, wobei der Brennstoffeinlass der Brennkammer mit dem Biogaspuffer (7) und/oder dem Vergaserauslass (21) und/ oder dem Pyrolysepuffer (12) verbunden ist.

3. Anordnung nach Anspruch 2, **dadurch gekennzeichnet, dass** die Steuervorrichtung (40) mit Reglern (70, 71, 72) betrieblich verbunden ist, um den Brennstoffstrom vom Biogaspuffer (7) zur Brennkammer und/oder vom Vergaserauslass (21) zur Brennkammer und/oder vom Pyrolysepuffer (12) zur Brennkammer zu steuern.

4. Anordnung nach einem der vorstehenden Ansprüche, **dadurch gekennzeichnet, dass** der Biogaspuffer (7) mit der Brennstoffzufuhr des Wirbelschichtvergasers (8) gekoppelt ist, um dem Wirbelschichtvergaser (8) Brennstoff zuzuführen, und/oder dadurch, dass der Pyrolysepuffer (12) mit der Brennstoffzufuhr des Wirbelschichtvergasers (8) gekoppelt ist, um dem Wirbelschichtvergaser (8) Brennstoff zuzuführen.

5. Anordnung nach Anspruch 4, **dadurch gekennzeichnet, dass** die Steuervorrichtung (40) mit Reglern (66, 67) betrieblich verbunden ist, um den Brennstoffstrom vom Biogaspuffer (7) zum Wirbelschichtvergaser (8) und/oder vom Pyrolysepuffer (12) zum Wirbelschichtvergaser (8) zu steuern.

6. Anordnung nach einem der vorstehenden Ansprüche, **dadurch gekennzeichnet, dass** der Vergaserauslass (18) des Wirbelschichtvergasers mit Verbrennungsöfen (9) zum Verbrennen brennbarer Bestandteile in dem durch den Vergaserauslass geführten Strom verbunden ist.

7. Anordnung nach Anspruch 6, **dadurch gekennzeichnet, dass** der Biogaspuffer (7) mit der Brennstoffzufuhr der Verbrennungsöfen (9) gekoppelt ist, um den Verbrennungsöfen (9) Brennstoff zuzuführen, und/oder dadurch, dass der Pyrolysepuffer (12) mit der Brennstoffzufuhr der Verbrennungsöfen (9) gekoppelt ist, um den Verbrennungsöfen (9) Brennstoff zuzuführen.

8. Anordnung nach Anspruch 7, **dadurch gekennzeichnet, dass** die Steuervorrichtung (40) mit Reglern (65, 68) betrieblich verbunden ist, um den Brennstoffstrom vom Biogaspuffer (7) zu den Verbrennungsöfen (9) und/oder vom Pyrolysepuffer (12) zu den Verbrennungsöfen (9) zu steuern.

9. Anordnung nach einem der vorstehenden Ansprüche, **dadurch gekennzeichnet, dass** eine oder mehrere der Verarbeitungsvorrichtungen (5, 8, 10), insbesondere alle Verarbeitungsvorrichtungen (5, 8, 10), und/oder die Generatoreinheit (22) und/oder die Verbrennungsöfen (9) aus Modulen aufgebaut sind, die demontiert und wieder montiert werden können, wobei die Module auf der Straße auf einem Fahrzeug, z. B. einem Tieflader oder Lastwagen, transportiert werden können.

10. Verfahren zur Abfallverarbeitung, insbesondere zur Verarbeitung oder Sanierung einer Mülldeponie, mit den Schritten:
- Zuführen eines Abfallstroms von einer Mülldeponie;
- Trennen des Abfallstroms in unterschiedliche wiederverwendbare Materialströme, z. B. Glas, Metall und Kunststoff, und einen Rückstandsmaterialstrom, z. B. einen organischen Materialstrom, einen kohlenstoffhaltigen Materialstrom und einen Chemieabfallstrom;
**dadurch gekennzeichnet, dass** das Verfahren die Schritte aufweist:
- Messen von Parametern der Zusammensetzung des Abfallstroms, der Rückstandsströme und der wiederverwendbaren Materialströme, zu denen die Masse gehört;
- Eingeben der gemessenen Parameter in eine Steuervorrichtung;
- Eingeben eines Endproduktbedarfs oder eines Anteils von Endprodukten in die Steuervorrichtung;
- Berechnen eines ersten, zweiten und dritten Rückstandsmaterialstroms anhand des eingegebenen Endproduktbedarfs oder des Anteils von Endprodukten und der Messparameter;
- Steuern der Zufuhr des ersten Rückstandsmaterialstroms zu einer Biogasvorrichtung, der Zufuhr des zweiten Rückstandsmaterialstroms zu einer Wirbelschichtvorrichtung und der Zufuhr des dritten Rückstandsmaterialstroms zu einer Pyrolysevorrichtung mit Hilfe der Steuervorrichtung.

## Revendications

1. Ensemble pour le traitement in situ de déchets, en particulier pour nettoyer un site d'élimination de déchets, pour former une série d'écoulements de sortie, comprenant :
- un dispositif de triage (1) pour fournir et séparer un écoulement de déchets en divers écoulements partiels, comprenant un écoulement de métaux, un écoulement de plastiques, un écoulement de verre, un écoulement organique et un écoulement de déchets chimiques ;
- un jeu de dispositifs de traitement, comprenant :
-- un dispositif fermenteur (5) pour convertir l'écoulement organique en biogaz combustibles, pourvu d'une entrée de fermenteur qui est raccordée fonctionnellement au dispositif de triage (1), une sortie de biogaz (6) et une sortie de produit résiduel de fermenteur ;
-- un gazéifieur à lit fluidisé (8) pour convertir des matériaux comprenant du carbone en produits gazeux combustibles, comprenant une entrée de gazéifieur qui est raccordée fonctionnellement au dispositif de triage (1), et une sortie de gazéifieur (18) ;
-- un dispositif de pyrolyse (10) pour décomposer un écoulement de matériaux décomposables, tel que l'écoulement de déchets chimiques, en hydrocarbures et cendre de pyrolyse, comprenant une entrée de pyrolyse qui est raccordée fonctionnellement au dispositif de triage et une sortie de pyrolyse (11) ;
- un dispositif de commande (40) ;
**caractérisé en ce que** :
- la sortie de biogaz (6) est raccordée à un tampon de biogaz (7) ;
- la sortie de pyrolyse (11) est raccordée à un tampon de pyrolyse (12) ;
- le dispositif de commande (40) comprend un dispositif de mesure (41 à 53) pour mesurer la composition des divers écoulements de déchets à partir du dispositif de triage, le dispositif de mesure comprenant un dispositif de pesage pour peser l'écoulement de déchets, les divers écoulements partiels et les écoulements résiduels, et le dispositif de mesure étant connecté fonctionnellement à un dispositif ordinateur et un dispositif de stockage de données pour enregistrer les données mesurées à partir du dispositif de mesure (41 à 53), un dispositif d'entrée pour entrer une proportion d'écoulements de sortie souhaités à partir de l'ensemble, un premier régulateur (60) à l'entrée de fermenteur, un deuxième régulateur (61) à l'entrée de gazéifieur, et un troisième régulateur (63) à l'entrée de pyrolyse, l'ordinateur étant pourvu de logiciel pour calculer, à partir des données mesurées et de la proportion des écoulements de sortie souhaités, des écoulements de matériau destinés à être distribués aux dispositifs, et commander les premier (60), deuxième (61) et troisième (63) régulateurs pour fournir des écoulements de matériau calculés s'écoulant vers les dispositifs de traitement (5, 8, 10).

2. Ensemble selon la revendication 1, **caractérisé en ce que** l'ensemble comprend en outre une unité de générateur (22) pourvue d'un générateur d'électricité, une chambre de combustion pourvue d'une entrée de combustible, et de préférence une turbine à vapeur raccordée fonctionnellement au générateur d'électricité et à la chambre de combustion, l'entrée de combustible de la chambre de combustion étant raccordée au tampon de biogaz (7) et/ou la sortie de gazéifieur (21) et/ou au tampon de pyrolyse (12).

3. Ensemble selon la revendication 2, **caractérisé en ce que** le dispositif de commande (40) est connecté fonctionnellement à des régulateurs (70, 71, 72) afin de commander l'écoulement de combustible du tampon de biogaz (7) à la chambre de combustion et/ou de la sortie de gazéifieur (21) à la chambre de combustion et/ou du tampon de pyrolyse (12) à la chambre de combustion, respectivement.

4. Ensemble selon une des revendications précédentes, **caractérisé en ce que** le tampon de biogaz (7) est accouplé avec l'alimentation en combustible du gazéifieur à lit fluidisé (8) afin de fournir du combustible au gazéifieur à lit fluidisé (8), et/ou **en ce que** le tampon de pyrolyse (12) est accouplé avec l'alimentation en combustible du gazéifieur à lit fluidisé (8) afin de fournir du combustible au gazéifieur à lit fluidisé (8).

5. Ensemble selon la revendication 4, **caractérisé en ce que** le dispositif de commande (40) est connecté fonctionnellement à des régulateurs (66, 67) afin de commander l'écoulement de combustible du tampon de biogaz (7) au gazéifieur à lit fluidisé (8), et/ou du tampon de pyrolyse (12) au gazéifieur à lit fluidisé (8), respectivement.

6. Ensemble selon une des revendications précédentes, **caractérisé en ce que** la sortie de gazéifieur (18) du gazéifieur à lit fluidisé est raccordée à des incinérateurs (9) pour brûler des constituants combustibles dans l'écoulement guidé à travers la sortie de gazéifieur.

7. Ensemble selon la revendication 6, **caractérisé en ce que** le tampon de biogaz (7) est accouplé avec l'alimentation en combustible desdits incinérateurs (9) afin de fournir un combustible auxdits incinérateurs (9) et/ou **en ce que** le tampon de pyrolyse (12) est accouplé avec l'alimentation en combustible desdits incinérateurs (9) afin de fournir un combustible auxdits incinérateurs (9).

8. Ensemble selon la revendication 7, **caractérisé en ce que** le dispositif de commande (40) est connecté fonctionnellement à des régulateurs (65, 68) afin de commander l'écoulement de combustible du tampon de biogaz (7) aux incinérateurs (9) et/ou du tampon de pyrolyse (12) aux incinérateurs (9), respectivement.

9. Ensemble selon une des revendications précédentes, **caractérisé en ce qu'**un ou plusieurs des dispositifs de traitement (5, 8, 10), en particulier tous les dispositifs de traitement (5, 8, 10) et/ou l'unité de générateur (22) et/ou les incinérateurs (9) sont constitués de modules qui peuvent être désassemblés et réassemblés, lesquels modules peuvent être transportés sur route sur un véhicule tel qu'une remorque surbaissée ou un camion.

10. Procédé pour traiter des déchets, en particulier pour traiter ou nettoyer un site d'élimination de déchets, comprenant les étapes consistant à :
- fournir un écoulement de déchets à partir d'un site d'élimination de déchets ;
- séparer l'écoulement de déchets en différents écoulements de matériau réutilisable, tel que du verre, du métal et du plastique et un écoulement de matériau résiduel, tel qu'un écoulement de matériau organique, un écoulement de matériau contenant du carbone et un écoulement de déchets chimiques ;
**caractérisé en ce que** le procédé comprend les étapes consistant à :
- mesurer des paramètres de la composition de l'écoulement de déchets, des écoulements de matériau résiduel et des écoulements de matériau réutilisable, y compris la masse ;
- entrer les paramètres mesurés dans un dispositif de commande ;
- entrer une demande de produit final ou une proportion de produits finaux dans le dispositif de commande ;
- calculer, à partir de la demande de produit final entrée ou de la proportion de produits finaux et des paramètres mesurés, des premier, deuxième et troisième écoulements de matériau résiduel ;
- au moyen du dispositif de commande, commander l'alimentation en premier écoulement de matériau résiduel à un dispositif de biogaz, l'alimentation en deuxième écoulement de matériau résiduel à un dispositif à lit fluidisé, et l'alimentation en troisième écoulement de matériau résiduel à un dispositif de pyrolyse.
